# EUROPÄISCHE PATENTSCHRIFT

(11) **EP 2 795 710 B1**
(45) Veröffentlichungstag und Bekanntmachung des Hinweises auf die Patenterteilung: **15.07.2020**
(21) Anmeldenummer: 12813850.0
(22) Anmeldetag: 20.12.2012
(51) Int. Cl.: H01M 8/18, H01M 8/241, H01M 8/0273, H01M 8/04082, H01M 8/04276, H01M 8/04186, H01M 8/24

(54) **REDOX-FLOW-BATTERIE MIT AUSSENLIEGENDER VERSORGUNGSLEITUNG UND/ODER ENTSORGUNGSLEITUNG**
REDOX FLOW BATTERY WITH EXTERNAL SUPPLY LINE AND/OR DISPOSAL LINE
BATTERIE À CIRCULATION D'OXYDO-RÉDUCTION AVEC LIGNE D'ALIMENTATION ET/OU LIGNE D'ÉVACUATION EXTERNES

(30) Priorität: 23.12.2011 DE 102011122010
(43) Veröffentlichungstag der Anmeldung: 29.10.2014
(73) Patentinhaber: Fraunhofer Gesellschaft zur Förderung der angewandten Forschung e.V., 80686 München (DE)
(72) Erfinder: DÖTSCH, Christian, 46045 Oberhausen (DE); BERTHOLD, Sascha, 46045 Oberhausen (DE); SEIPP, Thorsten, 44141 Dortmund (DE)
(74) Vertreter: Cohausz & Florack
(86) Internationale Anmeldenummer: PCT/EP2012/076453
(87) Internationale Veröffentlichungsnummer: WO 2013/092898

(56) Entgegenhaltungen:
- EP-A2- 0 814 527
- WO-A1-99/39397
- WO-A1-2008/116248
- PONCE-DE-LEON ET AL: "Characterization of the reaction environment in a filter-press redox flow reactor", ELECTROCHIMICA ACTA, ELSEVIER SCIENCE PUBLISHERS, BARKING, GB, Bd. 52, Nr. 19, 3. Mai 2007 (2007-05-03), Seiten 5815-5823, XP022059446, ISSN: 0013-4686, DOI: 10.1016/J.ELECTACTA.2007.02.080

## Beschreibung

Die Erfindung betrifft eine Redox-Flow-Batterie mit wenigstens einem einen Zellinnenraum umfassenden Zellrahmen und mit wenigstens einer außerhalb des Zellrahmens vorgesehenen Versorgungsleitung zum Zuführen von Elektrolyt zum Zellinnenraum und/oder wenigstens einer außerhalb der Zellrahmen vorgesehenen Entsorgungsleitung zum Abführen von Elektrolyt aus dem Zellinnenraum. Ferner betrifft die Erfindung ein Verfahren zum Betrieb einer Redox-Flow-Batterie.

Redox-Flow-Batterien sind bereits in verschiedenen Ausführungen bekannt. Solche Ausführungen sind beispielhaft in der WO 99/39397 A1 und der US 2004/0170893 A1 beschrieben. Ein wichtiger Vorteil der Redox-Flow-Batterien liegt in ihrer Eignung, sehr große Mengen an elektrischer Energie speichern zu können. Die Energie wird dabei in Elektrolyten gespeichert, die platzsparend in sehr großen Tanks bereitgehalten werden können. Die Elektrolyte weisen meist metallische Ionen unterschiedlicher Oxidationsstufen auf. Zur Entnahme von elektrischer Energie aus den Elektrolyten oder zum Wiederaufladen derselben werden die Elektrolyte durch eine sogenannte elektrochemische Zelle gepumpt.

Die elektrochemische Zelle wird dabei aus zwei Halbzellen gebildet, die über einen Separator, etwa in Form einer semipermeablen Membran, voneinander getrennt sind und jeweils ein Elektrolyt und eine Elektrode aufweisen. Der Separator hat die Aufgabe, Kathode und Anode einer elektrochemischen Zelle räumlich und elektrisch voneinander zu trennen, und muss daher für Ionen durchlässig sein, welche die Umwandlung der gespeicherten chemischen in elektrische Energie bewirken. Separatoren können beispielsweise aus mikroporösen Kunststoffen sowie Vliesen aus Glasfaser oder Polyethylen und sogenannten Diaphragmen bzw. semipermeable Membranen gebildet werden. An beiden Elektroden der elektrochemischen Zelle laufen Redox-Reaktionen ab, wobei von den Elektrolyten an einer Elektrode Elektronen freigesetzt und an der anderen Elektrode Elektronen aufgenommen werden. Die metallischen und/oder nichtmetallischen Ionen der Elektrolyte bilden Redox-Paare und erzeugen folglich ein Redox-Potential. Als Redox-Paare kommen beispielsweise Eisen-Chrom, Polysulfid-Bromid oder Vanadium in Frage. Diese oder auch andere Redox-Paare können grundsätzlich in wässriger oder nicht wässriger Lösung vorliegen.

Die Elektroden einer Zelle, zwischen denen sich infolge der Redoxpotentiale eine Potentialdifferenz ausbildet, sind außerhalb der Zelle, z.B. über einen elektrischen Verbraucher, elektrisch miteinander verbunden. Während die Elektronen außerhalb der Zelle von einer Halbzelle zur anderen gelangen, treten Ionen der Elektrolyte durch den Separator direkt von einer Halbzelle zur anderen Halbzelle über. Zum Wiederaufladen der Redox-Flow-Batterie kann an die Elektroden der Halbzellen anstelle des elektrischen Verbrauchers, beispielsweise mittels eines Ladegeräts, eine Potentialdifferenz angelegt werden, durch welche die an den Elektroden der Halbzellen ablaufenden Redox-Reaktionen umgekehrt werden.

Zur Bildung der beschriebenen Zelle werden Zellrahmen verwendet, die einen Zellinnenraum umschließen. Jede Halbzelle umfasst dabei einen derartigen Zellrahmen, die meist im Spritzgussverfahren aus einem thermoplastischen Kunststoff hergestellt werden. Zwischen zwei Zellrahmen wird ein Separator angeordnet, der typischerweise eine Membran oder ein Diaphragma ist und der die Elektrolyte der Halbzellen in Bezug auf einen konvektiven Stoffaustausch voneinander trennt, eine Diffusion bestimmter Ionen von einer Halbzelle in die andere Halbzelle aber zulässt. Den Zellinnenräumen wird zudem jeweils eine Elektrode derart zugeordnet, dass diese mit den die Zellinnenräume durchströmenden Elektrolyten in Kontakt stehen. Die Elektroden können beispielsweise den Zellinnenraum eines jeden Zellrahmens auf der dem Separator abgewandten Seite abschließen. Jeder Zellrahmen weist Öffnungen und Kanäle auf, durch welche der entsprechende Elektrolyt von einer Versorgungsleitung in den jeweiligen Zellinnenraum strömen und von dort wieder abgezogen sowie einer Entsorgungsleitung zugeführt werden kann. Die Elektrolyte der Halbzellen werden dabei über die Versorgungsleitung und die Entsorgungsleitung von einem Vorlagebehälter in einen Sammelbehälter umgepumpt. Dies erlaubt eine erneute Verwendung der Elektrolyte, die folglich weder verworfen noch ersetzt werden müssen.

Umfasst die Redox-Flow-Batterie nur eine einzige Zelle, so befinden sich außerhalb der die Halbzellen bildenden Zellrahmen eine Versorgungsleitungen für jede Halbzelle und eine Entsorgungsleitungen für jede Halbzelle. Jeder Zellrahmen weist dabei zwei Öffnungen auf, von denen eine mit einer Versorgungsleitung verbunden ist, während die andere Öffnung mit der Entsorgungsleitung verbunden ist. Innerhalb des Zellrahmens bzw. des Rahmenmantels ist jede Öffnung mit einem Strömungskanal verbunden, der zum Zellinnenraum geöffnet ist. Dies erlaubt das Zuführen von Elektrolyt von der Versorgungsleitung zum Zellinnenraum und das Abführen des durch den Zellinnenraum geströmten Elektrolyts über eine Entsorgungsleitung. Um den Elektrolyt gleichmäßiger über die Breite des Zellinnenraums zu verteilen und den Elektrolyt gleichmäßiger über die Breite des Zellinnenraums abzuziehen, kann der jeweilige Strömungskanal zwischen der äußeren Öffnung und dem Zellinnenraum, also im Bereich des Rahmenmantels der Zellrahmens, einmal oder mehrmals verzeigt sein.

Bedarfsweise wird eine Mehrzahl gleichartiger Zellen in einer Redox-Flow-Batterie zusammengefasst. Meist werden die Zellen dazu aufeinandergestapelt, weshalb man die Gesamtheit der Zellen auch als Zellstapel oder Zellstack bezeichnet. Die einzelnen Zellen werden meist parallel zueinander von den Elektrolyten durchströmt, während die Zellen meist elektrisch hintereinander geschaltet werden. Die Zellen sind also meist hydraulisch parallel und elektrisch in Reihe geschaltet. In diesem Fall ist der Ladungszustand der Elektrolyten in jeweils einer der Halbzellen des Zellstapels gleich.

Zur Verteilung der Elektrolyte auf die entsprechenden Halbzellen des Zellenstacks und zur gemeinsamen Abführung der Elektrolyte aus den jeweiligen Halbzellen sind Halbzellen untereinander mit Versorgungs- und Entsorgungsleitungen verbunden. Da jede Halbzelle bzw. jeder Zellinnenraum einer Zelle von einem anderen Elektrolyt durchströmt wird, müssen die beiden Elektrolyte während des Durchtritts durch den Zellstack voneinander getrennt werden. Deshalb sind längs des Zellstapels in der Regel zwei separate Versorgungsleitungen und zwei separate Entsorgungsleitungen vorgesehen. Jeder dieser Kanäle wird in der Regel teilweise von den Zellrahmen selbst gebildet, welche dazu vier Bohrungen aufweisen. Die Bohrungen erstrecken sich längs des Zellstacks und bilden hintereinander angeordnet und bedarfsweise über Dichtungsmaterialien voneinander getrennt die Versorgungs- und Entsorgungsleitungen.

In Jeder Halbzelle zweigen von jeweils einer Versorgungsleitung und jeweils einer Entsorgungsleitung Strömungskanäle ab, die mit dem Zellinnenraum verbunden sind und so das Zuführen und Abführen von Elektrolyten zu den Halbzellen bzw. das Durchströmen der Zellinnenräume mit Elektrolyten ermöglichen. Bei größeren Halbzellen mit größeren Zellinnenräumen verzweigen sich diese Strömungskanäle einerseits zwischen der Versorgungsleitung und den Zellinnenräumen und andererseits zwischen den Entsorgungsleitungen und den Zellinnenräumen, um eine gleichmäßige Durchströmung der Zellinnenräume zu erreichen und schwach durchströmte Zonen sowie Kurzschlussströmungen zu vermeiden. Um diese Verzweigungen ebenfalls in die Zellrahmen einbringen zu können, müssen die den Zellinnenraum umschließenden Rahmenmäntel der Zellrahmen verhältnismäßig breit ausgeführt werden. Dies hat jedoch zur Folge, dass die Rahmenmäntel große seitliche Rahmenflächen aufweisen, die als Dichtflächen zur Abdichtung des Zellstacks nach außen wirken und dazu gegeneinander oder gegen dazwischen vorgesehene Dichtmaterialien gepresst werden.

Um elektrische Kurzschlussströme zu vermeiden, müssen die Strömungskanäle eine ausreichende Länge aufweisen, so dass die Rahmenmäntel der Zellrahmen hinreichend breit ausgebildet werden müssen, was zu einer weiteren Vergrößerung der abzudichtenden Rahmenfläche führen kann. Dies gilt insbesondere dann, wenn die Strömungskanäle, wie bei spritzgegossenen Zellrahmen üblich, als offene Rinnen in die Außenseite der Rahmenmäntel der Zellrahmen eingelassen sind und erst beim zusammengebauten Zellstack durch Dichtungsmaterialien, Elektroden oder dergleichen verschlossen werden. Nachteilig ist auch, dass die Querschnittsfläche der Versorgungsleitungen und der Entsorgungsleitungen mit zunehmender Größe des Zellstacks bzw. mit zunehmender Anzahl an Zellen ansteigt, um genügend Elektrolyt hindurch transportieren zu können. Auch dies kann zu breiteren Rahmenmänteln der Zellrahmen führen.

In diesem Zusammenhang ist von Bedeutung, dass bei konstanten Flächenpressung auf die Dichtflächen die Zellrahmen umso stärker gegeneinander gepresst werden müssen, je größer die Dichtflächen sind. In der Praxis kommt es jedoch trotz sorgfältiger Auslegung der Redox-Flow-Batterien immer wieder zu Undichtigkeiten, weshalb bei der Auslegung der Zellrahmen eine Reihe von limitierenden Randbedingungen eingehalten werden müssen.

Vor diesem Hintergrund besteht die Aufgabe der vorliegenden Erfindung darin, die eingangs genannte und zuvor näher beschriebene Redox-Flow-Batterie und deren Betriebsweise derart auszugestalten und weiterzubilden, dass Redox-Flow-Batterien mit verbesserten Eigenschaften : bereitgestellt werden können.

Diese Aufgabe ist bei einer Redox-Flow-Batterie nach dem Oberbegriff des Anspruchs 1 dadurch gelöst, dass die Versorgungsleitung zum Zuführen von Elektrolyt zum Zellinnenraum und/oder die Entsorgungsleitung zum Abführen von Elektrolyt aus dem Zellinnenraum über eine Mehrzahl separater Strömungskanäle im Zellrahmen in fluidem Kontakt mit dem Zellinnenraum steht.

Zudem ist die genannte Aufgabe durch ein Verfahren der genannten Art nach Anspruch 13 gelöst, bei dem wenigstens einem von einem Zellrahmen umfassten Zellinnenraum über eine Mehrzahl von separaten, im Zellrahmen vorgesehenen Strömungskanälen ein Elektrolyt zugeführt und/oder aus wenigstens einem von einem Zellrahmen umfassten Zellinnenraum über eine Mehrzahl von im Zellrahmen vorgesehenen, separaten Strömungskanälen ein Elektrolyt abgeführt wird.

Unter einer Mehrzahl von im Zellrahmen vorgesehenen, separaten Strömungskanälen werden vorliegend solche verstanden, die innerhalb des Rahmenmantels des Zellrahmens untereinander unverbunden sind. Strömungskanäle sind nicht separat, wenn sich die Strömungskanäle von einem gemeinsamen Ausgangspunkt verzweigen und ansonsten getrennt voneinander verlaufen. Dabei können sich separate Strömungskanäle bedarfsweise verzweigen. Die separaten Strömungskanäle können zudem auch außerhalb des entsprechenden Zellrahmens separat voneinander weitergeführt sein, also separat voneinander von einer Versorgungsleitung abgehen und/oder separat voneinander in eine Entsorgungsleitung münden.

Es versteht sich, dass nicht alle Strömungskanäle im Rahmenmantel des Zellrahmens untereinander unverbunden sein müssen, solange wenigstens eine Mehrzahl von separaten Strömungskanälen vorgesehen ist, die der Versorgungsleitung und/oder der Entsorgungsleitung zugeordnet sind. Es kann also eine Mischung aus untereinander verbundenen, bedarfsweise verzweigten Strömungskanälen und separaten Strömungskanälen im Bereich des Rahmenmantels vorgesehen und der Versorgungsleitung und/oder der Entsorgungsleitung zugeordnet sein.

Die Erfindung hat erkannt, dass die Verteilung des einem Zellinnenraum zuzuführenden Elektrolyts in einem Bereich außerhalb des entsprechenden Zellrahmens vorgesehen werden kann. Dann kann der Elektrolyt durch die Mehrzahl von separaten Strömungskanälen dem Zellinnenraum über dessen Breite gleichmäßig verteilt zugeführt werden. Alternativ oder zusätzlich kann der Elektrolyt aus einem Zellinnenraum gleichmäßig verteilt über dessen Breite abgezogen werden, wenn dafür eine Mehrzahl separater Strömungskanäle vorgesehen ist und die Zusammenführung des abgezogenen Elektrolyts erst außerhalb des Zellrahmens erfolgt.

Bei einer solchen Ausgestaltung einer Redox-Flow-Batterie müssen im Zellrahmen lediglich separate Durchführungen oder Bohrungen für die separaten Strömungskanäle zwischen dem Zellinnenraum einerseits und der Versorgungsleitung und/oder der Entsorgungsleitung andererseits vorgesehen werden. Eine Verzweigung der Strömungskanäle im Bereich des Rahmenmantels des Zellrahmens zur Verteilung des Elektrolyten über die Breite des Zellinnenraums und/oder zur Zusammenführung des über die Breite des Zellinnenraums abgezogenen Elektrolyts ist entbehrlich.

Im Ergebnis kann der Zellrahmen einerseits sehr einfach und damit kostengünstig sowie andererseits mit einem sehr schmalen Rand, also mit einem schmalen Rahmenmantel um den Zellinnenraum herum ausgebildet werden. Letzteres führt dazu, dass nur eine sehr schmale bzw. kleine Rahmenfläche bereitgestellt werden muss, die als Dichtfläche zur Abdichtung der Redox-Flow-Batterie gegenüber einem unerwünschten Austritt von Elektrolyt dient. Mithin können Zellstacks mit einer sehr großen Anzahl von Zellen bereitgestellt werden, ohne dass die Gefahr von Undichtigkeiten besteht. Bedarfsweise können die Zellrahmen mit Ringdichtungen, etwa in der Art von O-Ringdichtungen abgedichtet werden.

Ein besonderer Vorteil der Erfindung liegt zudem darin, dass große Zellrahmen mit sehr großflächigen Zellinnenräumen bereitgestellt werden können. Mittels einer hinreichenden Anzahl separater Strömungskanäle, die vorzugsweise gleichmäßig über die Breite des Zellinnenraums verteilt angeordnet sein können, kann nämlich einerseits die Verteilung des Elektrolyts auch über eine große Breite eines Zellinnenraums außerhalb des Zellrahmens erfolgen und andererseits die Zusammenführung des über eine große Breite des Zellinnenraums separat abgezogenen Elektrolyts außerhalb des Zellrahmens erfolgen. Im Zellrahmen muss also beispielsweise lediglich eine ausreichende Anzahl von Durchführungen zum Zellinnenraum vorgesehen sein, die mit der Versorgungsleitung und/oder der Entsorgungsleitung verbunden sind.

Dabei kann eine einfache Anpassung der Redox-Flow-Batterie an unterschiedlich große Zellrahmen bzw. Zellinnenräume erfolgen, in dem die Anzahl der separaten Strömungskanäle an die Breite der jeweiligen Zellinnenräume angepasst wird. Wenn dabei die Strömungsquerschnittsflächen der Versorgungsleitung und/oder der Entsorgungsleitung immer hinreichend groß im Vergleich zu den Strömungsquerschnittsflächen der separaten Strömungskanäle gewählt wird, kann zudem immer eine gleichmäßig über die Breite des Zellinnenraum verteilte Zuführung und/oder Abführung von Elektrolyt gewährleistet werden.

Die Anbindung der im Zellrahmen vorgesehenen, separaten Strömungskanäle an die Versorgungsleitung und/oder die Entsorgungsleitung kann auf unterschiedliche Weise erfolgen. So kann die Versorgungsleitung und/oder die Entsorgungsleitung unmittelbar an den Zellrahmen angrenzen. Dann stehen die äußeren Öffnungen der separaten Strömungskanäle im Zellrahmen bzw. Rahmenmantel unmittelbar mit der Versorgungsleitung und/oder der Entsorgungsleitung in Verbindung. Vorzugsweise bildet der Zellrahmen einen Teil der Wandung der Versorgungsleitung und/oder der Entsorgungsleitung. Die Versorgungsleitung und/oder die Entsorgungsleitung kann aber auch beabstandet von dem Zellrahmen vorgesehen sein. Dann wird der Zellrahmen mittels Leitungen oder dergleichen mit der Versorgungsleitung und/oder der Entsorgungsleitung verbunden. Die Anzahl der Leitungen stimmt dabei vorzugsweise mit der Anzahl der separaten Strömungskanäle überein. Mit anderen Worten kann jeder separate Strömungskanal über einen Leitungsabschnitt außerhalb des Zellrahmens mit der Versorgungsleitung und/oder der Entsorgungsleitung verbunden sein.

Bei einer ersten bevorzugten Ausgestaltung der Redox-Flow-Batterie steht der Zellinnenraum über wenigstens 10, vorzugsweise wenigstens 20, insbesondere wenigstens 30, separate, im Zellrahmen vorgesehene Strömungskanäle mit der Versorgungsleitung zum Zuführen von Elektrolyt zum Zellinnenraum und/oder mit der Entsorgungsleitung zum Abführen von Elektrolyt aus dem Zellinnenraum in fluidem Kontakt. Durch die hohe Anzahl an separaten Strömungskanäle, die auch 50 und darüber betragen kann, kann der Elektrolyt über einen breiten Zellinnenraum gleichmäßig verteilt werden. Alternativ oder zusätzlich kann der Elektrolyt nach dem Durchströmen des Zellinnenraums über die Vielzahl von separaten Strömungskanälen gleichmäßig aus dem Zellinnenraum abgezogen werden, und zwar auch dann, wenn der Zellinnenraum sehr breit ist. Dies eröffnet zudem die Möglichkeit auch sehr große Zellrahmen mit sehr großflächigen Zellinnenräumen in Redox-Flow-Batterien zu verwenden.

Damit einerseits die Zellrahmen verhältnismäßig flach ausgebildet und gleichzeitig ein ausreichender Volumenstrom an Elektrolyt durch die Zellen geleitet werden können/kann, kann die Mehrzahl separater Strömungskanäle im Zellrahmen zum, Zuführen von Elektrolyt zum Zellinnenraum und/oder zum Abführen von Elektrolyt aus dem Zellinnenraum jeweils einen hydraulischen Innendurchmesser zwischen 20 mm und 0,5 mm, vorzugsweise zwischen 10 mm und 1 mm, aufweisen.

Um eine möglichst gleichmäßige Durchströmung des Zellinnenraums des Zellrahmens zu erreichen, können die Strömungskanäle zwischen dem Zellinnenraum und der Versorgungsleitung sowie die Strömungskanäle zwischen dem Zellinnenraum und der Entsorgungsleitung auf unterschiedlichen Seiten des Zellrahmens und/oder des Rahmenmantels bezogen auf den Zellinnenraum vorgesehen sein. Der Elektrolyt wird dann an einer Seite des Zellrahmens dem Zellinnenraum zugeführt und auf der gegenüberliegenden Seite des Zellrahmens aus dem Zellinnenraum abgeführt.

Um die abzudichtende Rahmenfläche des Zellrahmens bzw. des Rahmenmantels möglicht gering zu halten, ist es bevorzugt, wenn die separaten Strömungskanäle zum Versorgen des Zellinnenraums mit Elektrolyt und/oder die separaten Strömungskanäle zum Abführen von Elektrolyt aus dem Zellinnenraum im Zellrahmen, vorzugsweise im Rahmenmantel desselben, im Wesentlichen unverzweigt vorgesehen sind.

Auch bei einer Vielzahl von separaten Strömungskanälen kann eine gleichmäßige Durchströmung der Strömungskanäle über die Breite des Zellrahmens bzw. des Zellinnenraums gewährleistet werden, wenn die Querschnittsfläche der Versorgungsleitung und/oder die Querschnittsfläche der Entsorgungsleitung wenigstens um den Faktor 10, vorzugsweise 50, insbesondere 100, größer ist als die Querschnittsfläche jedes Strömungskanals der Mehrzahl von separaten Strömungskanälen zwischen dem Zellinnenraum einerseits und der Versorgungsleitung und/oder der Entsorgungsleitung andererseits.

Um die zuvor für eine Halbzelle bzw. für einen Zellrahmen beschriebenen Vorteile in Bezug auf beide Halbzellen einer Zelle der Redox-Flow-Batterie zu erhalten, kann wenigstens eine Zelle mit zwei Halbzellen vorgesehen sein, wobei jede Halbzelle einen einen Zellinnenraum umfassenden Zellrahmen und wenigstens eine außerhalb der Zellrahmen vorgesehene Versorgungsleitung zum Zuführen von Elektrolyt zum den Zellinnenräumen aufweist. Die wenigstens eine Versorgungsleitung zum Zuführen von Elektrolyt zu den Zellinnenräumen kann dann jeweils über eine Mehrzahl separater, im Zellrahmen vorgesehener Strömungskanäle in fluidem Kontakt mit den Zellinnenräumen stehen. Es werden also beiden Zellrahmen einer Zelle über jeweils eine Mehrzahl von separaten, im Zellrahmen vorgesehenen Strömungskanälen mit Elektrolyt versorgt. Dabei ist vorzugsweise jeder Halbzelle bzw. jedem Zellrahmen der Zelle eine andere Versorgungsleitung zugeordnet, um beide Halbzellen mit unterschiedlichen Elektrolyten versorgen zu können. Im Falle eines Zellstacks können mehrere, vorzugsweise alle, Zellen des Zellstacks in der angegebenen Weise ausgebildet sein.

Alternativ oder zusätzlich kann zur Erreichung der zuvor für die Halbzelle beschriebenen Vorteile für beide Halbzellen einer Zelle wenigstens eine solche Zelle mit zwei Halbzellen vorgesehen sein, wobei jede Halbzelle einen einen Zellinnenraum umfassenden Zellrahmen und wenigstens eine außerhalb der Zellrahmen vorgesehene Entsorgungsleitung zum Abführen von Elektrolyt aus den Zellinnenräumen aufweist. Die wenigstens eine Entsorgungsleitung zum Abführen von Elektrolyt aus den Zellinnenräumen kann dann jeweils über eine Mehrzahl separater, im Zellrahmen vorgesehener Strömungskanäle in fluidem Kontakt mit den Zellinnenräumen stehen. Somit wird der Elektrolyt aus jedem Zellinnenraum der beiden Halbzellen über jeweils eine Mehrzahl von im Zellrahmen vorgesehenen, separaten Strömungskanälen abgezogen. Dabei stehen vorzugsweise die beiden Zellinnenräume der beiden Halbzellen in fluidem Kontakt mit jeweils einer anderen Entsorgungsleitung, damit die beiden Elektrolyte, mit denen die Zelle betrieben wird, nicht vermischt werden. Im Falle eines Zellstacks können mehrere, vorzugsweise alle, Zellen des Zellstacks in der angegebenen Weise ausgebildet sein.

Besonders bevorzugt kann es sein, wenn eine Mehrzahl von Zellen vorgesehen ist, die bedarfsweise zu einem Zellstack zusammengefasst sind, die jeweils wenigstens einen einen Zellinnenraum umfassenden Zellrahmen aufweisen, wobei den Zellen wenigstes eine außerhalb der Zellrahmen angeordnete Versorgungsleitung zum Zuführen von Elektrolyt zu den jeweiligen Zellinnenräumen zugeordnet ist. Dabei kann die wenigstens eine Versorgungsleitung zum Zuführen von Elektrolyt zu den Zellinnenräumen jeweils über eine Mehrzahl von im jeweiligen Zellrahmen vorgesehenen, separaten Strömungskanälen in fluidem Kontakt mit den Zellinnenräumen stehen. Es kann also eine Mehrzahl von Zellen vorgesehen sein, von denen jeweils wenigstens ein Zellinnenraum über eine Mehrzahl von separaten Strömungskanälen im jeweiligen Zellrahmen über eine Versorgungsleitung mit Elektrolyt versorgt wird. Wenn es sich dabei jeweils um die Zellinnenräume gleicher Halbzellen handelt, kann grundsätzlich eine einzige Versorgungsleitung ausreichen, wenn die gleichen Halbzellen parallel zueinander mit dem gleichen Elektrolyt versorgt werden. Aus konstruktiver Sicht können aber auch mehrere Versorgungsleitungen vorgesehen sein. Wenn es sich bei den über eine Mehrzahl von separaten Strömungskanälen versorgten Zellinnenräumen nicht um solche gleicher Halbzellen handelt, ist es zur Verwendung unterschiedlicher Elektrolyte für unterschiedliche Halbzellen bevorzugt, wenn wenigstens zwei unterschiedliche Versorgungsleitungen vorgesehen sind, wobei jede der beiden Versorgungsleitungen gleichartigen Halbzellen zugeordnet ist.

Alternativ oder zusätzlich kann in analoger Weise eine Mehrzahl von Zellen vorgesehen sein, die jeweils wenigstens einen einen Zellinnenraum umfassenden Zellrahmen aufweisen, wobei den Zellen wenigstes eine außerhalb der Zellrahmen angeordnete Entsorgungsleitung zum Abführen von Elektrolyt aus den Zellinnenräumen zugeordnet ist. Dabei kann die wenigsten eine Entsorgungsleitung zum Abführen von Elektrolyt aus den Zellinnenräumen jeweils über eine Mehrzahl von im jeweiligen Zellrahmen vorgesehenen, separaten Strömungskanälen in fluidem Kontakt mit den Zellinnenräumen stehen. Es kann also eine Mehrzahl von Zellen vorgesehen sein, wobei aus jeweils wenigstens einem Zellinnenraum einer jeden Zelle über eine Mehrzahl von separaten Strömungskanälen im jeweiligen Zellrahmen der den Zellinnenraum durchströmende Elektrolyt abgezogen wird. Wenn es sich dabei jeweils um die Zellinnenräume gleicher Halbzellen handelt, kann grundsätzlich eine einzige Entsorgungsleitung ausreichen, wenn beispielsweise die gleichen Halbzellen parallel zueinander mit dem gleichen Elektrolyt versorgt werden. Aus konstruktiver Sicht können aber auch mehrere Entsorgungsleitungen vorgesehen sein. Wenn es sich bei den Zellinnenräumen, deren Elektrolyt jeweils über eine Mehrzahl von Strömungskanälen abgezogen wird, nicht um solche gleicher Halbzellen handelt, ist es zur Verwendung unterschiedlicher Elektrolyte für unterschiedliche Halbzellen bevorzugt, wenn wenigstens zwei unterschiedliche Entsorgungsleitungen vorgesehen sind, wobei jede der beiden Entsorgungsleitungen gleichartigen Halbzellen zugeordnet ist.

Um die Leistung und die Eigenschaften der Redox-Flow-Batterie an die jeweils gestellten Anforderungen anpassen zu können, kann die Mehrzahl von Zellen zu einem Zellstack zusammengefügt werden, wozu die Zellen vorzugsweise aufeinander gestapelt werden können.

Auf konstruktiv einfache Weise kann sichergestellt werden, dass die in dem wenigstens einen Zellrahmen vorgesehenen, separaten Strömungskanäle dicht sind, wenn die Mehrzahl separater Strömungskanäle des wenigstens einen Zellrahmens zum Zuführen von Elektrolyt zum jeweiligen Zellinnenraum jeweils über ihren gesamten Umfang vom Zellrahmen umfasst sind. Alternativ oder zusätzlich kann auch die Mehrzahl separater Strömungskanäle des wenigstens einen Zellrahmens zum Abführen von Elektrolyt aus dem jeweiligen Zellinnenraum jeweils über ihren gesamten Umfang vom Zellrahmen umfasst sein. Die Strömungskanäle sind dann nicht als zu einer seitlichen Außenseite des Zellrahmens offene Kanäle oder Rinnen ausgebildet, die erst durch Anklage an ein angrenzendes Bauteil geschlossen werden. Die Strömu8ngskanäle sind stattdessen längs des Strömungswegs vom jeweiligen Zellrahmen selbst umgeben, wobei die Wandungen der Strömungskanäle vorzugsweise im Wesentlichen ausschließlich durch den Zellrahmen gebildet werden. Dies kann beispielsweise dadurch erreicht werden, dass die separaten Strömungskanäle durch separate Bohrungen durch den Rahmenmantel des Zellrahmens oder dergleichen gebildet werden.

Wie sich bereits aus der beschriebenen, bevorzugten konstruktiven Ausgestaltung der Redox-Flow-Batterie ergibt, ist die Erfindung auch verfahrensmäßig nicht auf die Zuführung und/oder Abführung von Elektrolyt zu einem Zellinnenraum und/oder von einem Zellinnenraum einer Zelle oder im Falle von einem Zellstack gleichartiger Zellen beschränkt. Vielmehr ist es bevorzugt, dass der Elektrolyt jeweils über einer Mehrzahl von separaten Strömungskanälen einer Mehrzahl von von Zellrahmen umfassten Zellinnenräumen einer Zelle und/oder eines Zellstacks zugeführt und/oder der Elektrolyt jeweils über eine Mehrzahl von separaten Strömungskanälen aus einer Mehrzahl von von Zellrahmen umfassten Zellinnenräumen einer Zelle und/oder eines Zellstacks abgeführt wird. Die Mehrzahl separater Strömungskanäle ist auch dann im jeweiligen Zellrahmen vorgesehen.

Grundsätzlich ist es in diesem Zusammenhang bevorzugt, wenn der gesamte Zellstack der Redox-Flow-Batterie gleichförmig aufgebaut ist. Vorzugsweise ist der Zellstack modular aufgebaut, wobei die Bauteile unterschiedlicher Zellen einander gleichen oder gar identisch zueinander sind. Das verringert den konstruktiven und apparativen Aufwand.

Alternativ oder zusätzlich ist es bevorzugt, wenn alle Zellen eines Zellstacks gleichartig oder gar identisch zueinander betrieben werden. Dies vereinfacht den verfahrensmäßigen Aufwand.

Der gleichartige Aufbau und der gleichartige Betrieb des Zellstacks sind vorliegend jedoch nicht erforderlich. So kann von der erfindungsgemäßen Lehre auch dann Gebrauch gemacht werden, wenn nur einige Zellen des Zellstacks in der beanspruchten Weise aufgebaut sind und/oder in der beschriebenen Weise betrieben werden.

Es können zum Beispiel einzelne Zellrahmen oder Zellen vorgesehen sein, die keine Mehrzahl von separaten Strömungskanälen für die Versorgung des Zellinnenraums mit Elektrolyt und/oder für das Abziehen des Elektrolyts aus dem Zellinnenraum aufweisen. Dies ist aus den genannten Gründen jedoch grundsätzlich weniger bevorzugt.

Die Erfindung wird nachfolgend anhand einer lediglich Ausführungsbeispiele darstellenden Zeichnung näher erläutert. In der Zeichnung zeigt
- Fig. 1A und 1B: einen aus dem Stand der Technik bekannten Zellstack einer Redox-Flow-Batterie in einem Längsschnitt,
- Fig. 2: eine Draufsicht auf einen Zellrahmen des Zellstacks aus Fig. 1,
- Fig. 3: eine erste erfindungsgemäße Ausgestaltung einer Redox-Flow-Batterie in einem Querschnitt,
- Fig. 4: die Redox-Flow-Batterie aus Fig. 3 in einem Längsschnitt,
- Fig. 5: eine zweite erfindungsgemäße Ausgestaltung einer Redox-Flow-Batterie in einem Querschnitt und
- Fig. 6: eine Zelle der Redox-Flow-Batterie aus Fig. 5 in einem Schnitt senkrecht zur Zellenebene.

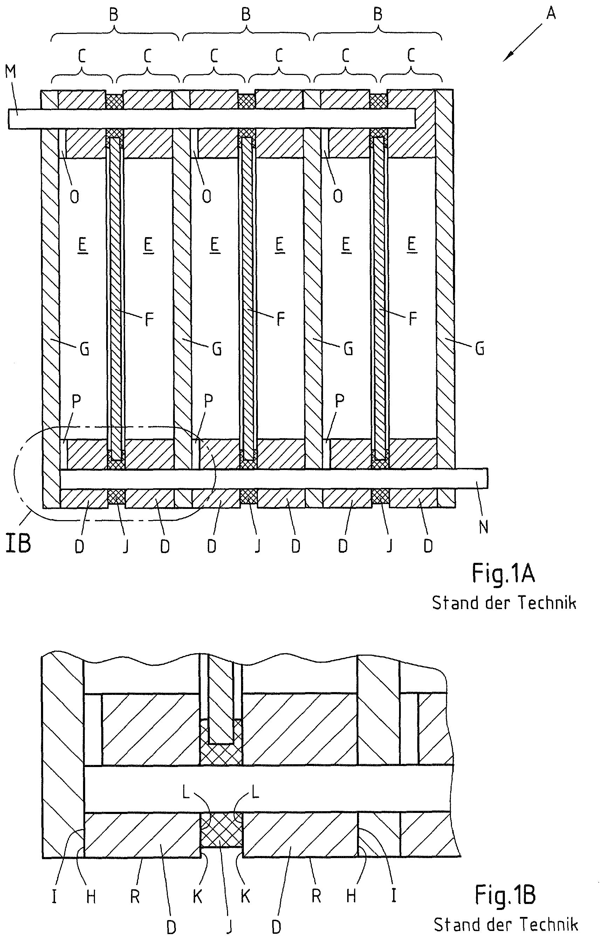

In den Fig. 1A und 1B ist ein Zellstack A, also ein Zellstapel einer aus dem Stand der Technik bekannten und eingangs näher beschriebenen Redox-Flow-Batterie in einem Längsschnitt dargestellt. Der Zellstack A umfasst drei Zellen B, die jeweils zwei Halbzellen C mit korrespondierenden Elektrolyten aufweisen. Jede Halbzelle C weist einen Zellrahmen D auf, der einen Zellinnenraum E umfasst, durch den ein in einem Vorlagebehälter bevorrateter Elektrolyt hindurchgeleitet werden kann.

Der Zellinnenraum E ist angrenzend zum Zellrahmen D der zweiten Halbzelle C durch eine zwischen den Zellrahmen D der beiden Halbzellen C vorgesehene, semipermeable Membran F verschlossen. Ein konvektives Übertreten der beiden unterschiedlichen Elektrolyte der beiden Halbzellen C in den Zellinnenraum E des Zellrahmens D der anderen Halbzelle C wird so verhindert. Über die semipermeable Membran F können jedoch Ionen per Diffusion von einem Elektrolyten auf den anderen Elektrolyten übergehen, wodurch ein Ladungstransport erfolgt. Durch Redox-Reaktionen der Redox-Paare der Elektrolyte an den Elektroden G der Halbzellen C einer Zelle B werden entweder Elektronen freigesetzt oder aufgenommen. Die freigesetzten Elektronen können über eine außerhalb der Redox-Flow-Batterie vorgesehene, bedarfsweise einen elektrischen Verbraucher aufweisende, elektrische Verbindung von einer Elektrode G zur anderen Elektrode G einer Zelle B fließen. An welcher Elektrode G welche Reaktionen ablaufen, hängt davon ab, ob die Redox-Flow-Batterie geladen oder entladen wird.

Die Elektroden G verschließen zudem die Zellinnenräume E angrenzend zur nächsten Zelle B. Die Elektrode G liegt bei dem dargestellten Zellstack A flächig auf einer Außenseite H des Zellrahmens D auf. Die Elektrode G bildet also im Anlagebereich mit der Außenseite H des Zellrahmens D eine Rahmenfläche, die als Dichtfläche I wirkt. Zwischen den einander zugewandten Außenseiten H der Zellrahmen D einer Zelle B befindet sich ein Dichtmaterial J, in dem die Membran F dichtend aufgenommen ist. Das Dichtmaterial J liegt flächig an den Außenseiten K der angrenzenden Zellrahmen D an und bildet so Rahmenflächen, die als Dichtflächen L wirken.

Längs zum Zellstack A erstrecken sich bei der dargestellten Redox-Flow-Batterie vier Kanäle. Zwei davon sind Versorgungsleitungen M zur Zuführung der beiden Elektrolyte. Die zwei anderen Kanäle sind Entsorgungsleitungen N zum Abführen der Elektrolyte. In der Fig. 1A ist jeweils eine Versorgungsleitung M und eine Entsorgungsleitung N dargestellt. Von der Versorgungsleitung M zweigen in jeweils einer Halbzelle C jeder Zelle B Strömungskanäle O ab, über die der Elektrolyt dem entsprechenden Zellinnenraum E der Halbzelle C zugeführt werden kann. An gegenüberliegenden Abschnitten der entsprechenden Zellrahmen D sind Strömungskanäle P vorgesehen, über die der Elektrolyt aus den Zellinnenräumen E in die Entsorgungsleitung N abgeleitet werden kann. Die nicht in der Fig. 1A dargestellte Versorgungsleitung M und ebenfalls nicht dargestellte Entsorgungsleitung N ermöglichen dem zweiten Elektrolyt, über gleichartige Strömungskanäle O,P durch die jeweils anderen Zellinnenräume E der anderen Halbzellen C zu strömen.

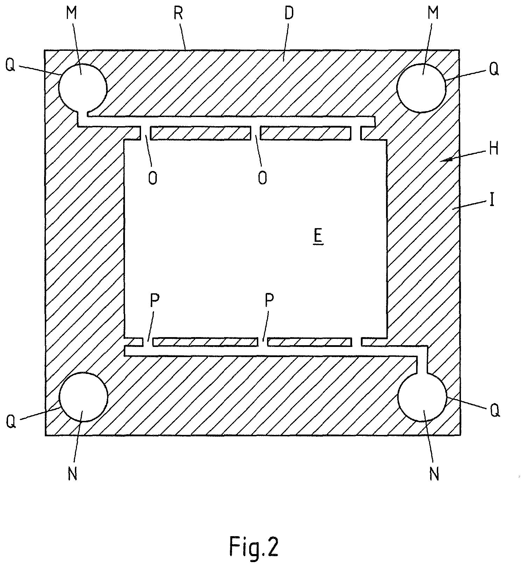

In der Fig. 2 ist eine Draufsicht auf einen Zellrahmen D dargestellt. In den Ecken des Zellrahmens D sind vier Bohrungen Q vorgesehen, von denen jede Bohrung ein Teil einer Versorgungsleitung M oder einer Entsorgungsleitung N bildet. Die Strömungskanäle O,P sind als Vertiefungen in die dargestellte Außenseite H des um den Zellinnenraum E umlaufenden Rahmenmantels R des Zellrahmens D eingelassen. Die Strömungskanäle O,P weisen untereinander Verzweigungen auf und sind mit jeweils einer Bohrung Q verbunden. Die Strömungskanäle O,P sind daher allesamt im Zellrahmen D miteinander verbunden. Es sind folglich weder der Versorgungsleitung M noch der Entsorgungsleitung N separate Strömungskanäle zugeordnet.

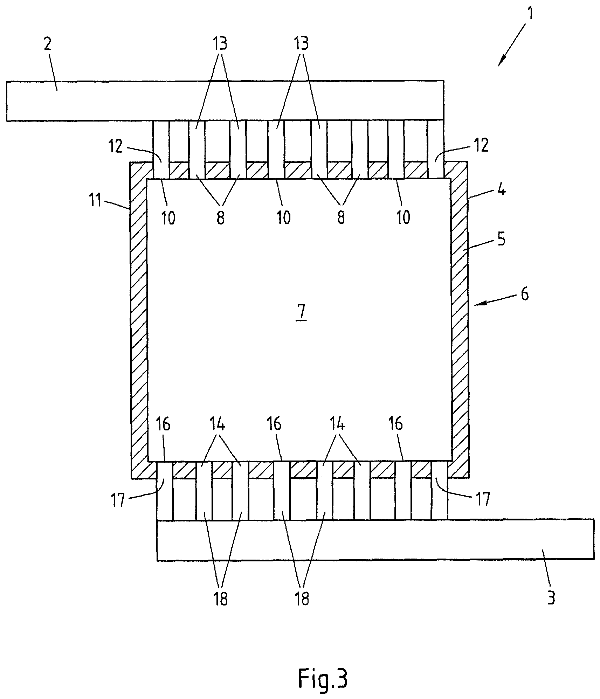

In der Fig. 3 ist ein Querschnitt durch eine Redox-Flow-Batterie 1 beschrieben, deren Funktionsprinzip der in den Fig. 1 und 2 dargestellten Redox-Flow-Batterie im Wesentlichen gleicht, bei der jedoch anders als bei der in den Fig. 1 und 2 dargestellten Redox-Flow-Batterie die Versorgungsleitung 2 und die Entsorgungsleitung 3 eines jeden Zellrahmens 4 außerhalb des jeweiligen Zellrahmens 4 vorgesehen ist. Der Querschnitt der Versorgungsleitung 2 und der Entsorgungsleitung 3 müssen daher nicht durch die als Dichtflächen 5 wirkenden Rahmenflächen der Außenseiten 6 der Zellrahmen 4 abgedichtet werden. Die Rahmenfläche bzw. Dichtfläche 5 der Zellrahmen 4 kann dementsprechend klein im Vergleich zu dem von dem Zellrahmen 4 umfassten Zellinnenraum 7 ausgebildet werden.

Die Zuführung des Elektrolyten über den Zellrahmen 4 in den Zellinnenraum 7 erfolgt über in den Zellrahmen 4 eingelassene, separate Strömungskanäle 8, die parallel zueinander verlaufen und gleichmäßig über die Breite des Zellinnenraums 7 verteilt sind. Die Strömungskanäle 8 weisen auf der dem Zellinnenraum 7 zugewandten Seite des Zellrahmens 4 Öffnungen 10 auf, über welche der Elektrolyt gleichmäßig über die Breite des Zellinnenraums 7 verteilt werden kann. Zudem bilden die Strömungskanäle 8 am äußeren Rand des Zellrahmens 4, d.h. an der Außenseite des umlaufend zum Zellinnenraum 7 vorgesehenen Rahmenmantels 11, Öffnungen 12, die über dünne Leitungen 13 separat mit der gemeinsamen Versorgungsleitung 2 verbunden sind. Dem Zellinnenraum 7 kann also über die Versorgungsleitung 2, die dünnen Leitungen 13 und die parallelen und separaten Strömungskanäle 8 im Zellrahmen 4 ein Elektrolyt zugeführt werden.

An der gegenüberliegenden Rahmenseite des Zellrahmens 4 bzw. an der gegenüberliegenden Seite des Rahmenmantels 11 sind ebenfalls parallele und separate Strömungskanäle 14 vorgesehen, die über entsprechende Öffnungen 16, 17 zum Zellinnenraum 7 und zum Rand des Zellrahmens 4, d.h. zur Außenseite des Rahmenmantels 11, offen sind. Die separaten Strömungskanäle 14 sind parallel zueinander ausgerichtet, gleichmäßig über die Breite des Zellinnenraum 7 verteilt angeordnet. Diese Strömungskanäle 14 sind dazu vorgesehen, den Elektrolyt vom Zellinnenraum 7 über den Zellrahmen 4 in die Entsorgungsleitung 3 abzuleiten, wozu die separaten Strömungskanäle über dünne Leitungen 18 mit einer gemeinsamen Entsorgungsleitung 3 verbunden sind.

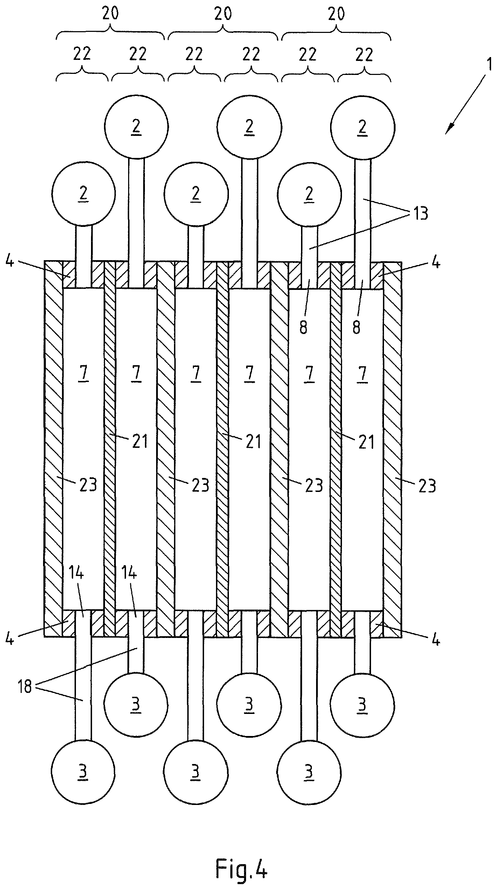

In der Fig. 4 ist die Redox-Flow-Batterie 1 aus Fig. 3 in einem Längsschnitt dargestellt. Die Zellen 20 sind dabei aus gleichartigen Bauteilen zusammengesetzt, die daher die gleichen Bezugszeichen tragen. Die Separatoren sind als semipermeable Membranen 21 ausgebildet und zwischen den Zellrahmen 4 der zueinander gehörigen Halbzellen 22 vorgesehen, die gegeneinander gepresst werden und so die Membranen 21 nach außen abdichten.

Zwischen den Zellen 20 ist jeweils eine Elektrode 23 vorgesehen, die den Zellinnenraum 7 von wenigstens einem Zellrahmen 4 nach außen abschließt. Bei der dargestellten und insoweit bevorzugten Redox-Flow-Batterie 1 weist jede Halbzelle 22 bzw. jeder Zellrahmen 4 einen Anschluss an eine Versorgungsleitung 2 und eine Entsorgungsleitung 3 auf. Die Versorgungsleitungen 2 für einen gleichen Elektrolyt können ebenso untereinander verbunden sein, wie die Entsorgungsleitungen 3 für einen gleichen Elektrolyt. Die Versorgungsleitung 2 und eine Entsorgungsleitung 3 können aber auch separat mit wenigstens einem Vorlagebehälter verbunden sein.

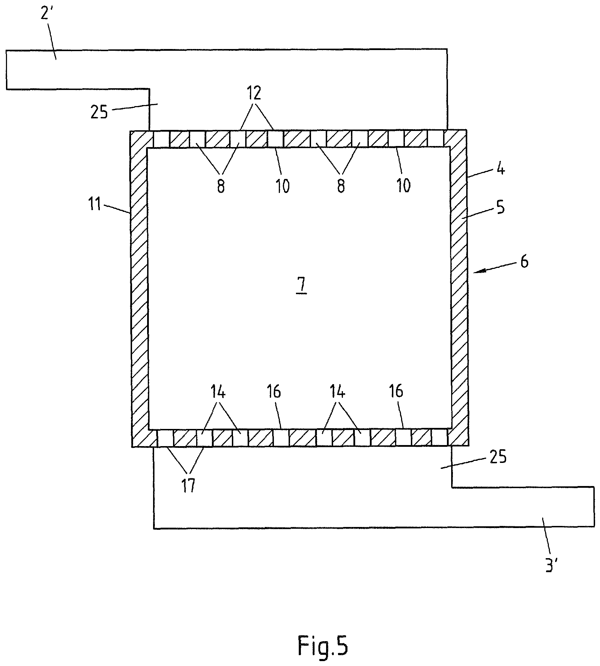

Die in der Fig. 5 in einem Querschnitt dargestellte Redox-Flow-Batterie 1' gleicht vom funktionellen Aufbau der in den Fig.3 und 4 dargestellten Redox-Flow-Batterie 1, wobei jedoch auf die dünnen Verbindungsleitungen zwischen dem Zellrahmen 4 einerseits und der Versorgungsleitung 2' bzw. der Entsorgungsleitung 3' andererseits verzichtet wird. Stattdessen weist die Versorgungsleitung 2' und die Entsorgungsleitung 3' auf der dem Zellrahmen 4 zugewandten Seite einen länglichen, spaltförmigen Abschnitt 25 mit einem gegenüber dem angrenzenden Bereich der Versorgungsleitung 2' und der Entsorgungsleitung 3' verringerten Querschnitt auf. Diese spaltförmigen Abschnitte 25 verbinden eine Reihe separater Strömungskanäle 8, 14. Die entsprechenden Strömungskanäle 8, 14 sind jeweils vollständig in den Zellrahmen 4 eingelassen. Eine separate Abdichtung der Strömungskanäle 8,14 über die den angrenzenden Zellen zugewandte Außenseiten des Zellrahmens 4 sind daher entbehrlich.

Die spaltförmigen Abschnitte 25 der Versorgungsleitung 2' und der Entsorgungsleitung 3' sind über Öffnungen 12, 17 im Rahmenmantel 11 des Zellrahmens 4 mit den Strömungskanälen 8, 14 der Elektrolytzuführung 8, 14 verbunden. Die Strömungskanäle 8, 14 sind über weitere Öffnungen 10,16 zum Zellinnenraum 7 offen.

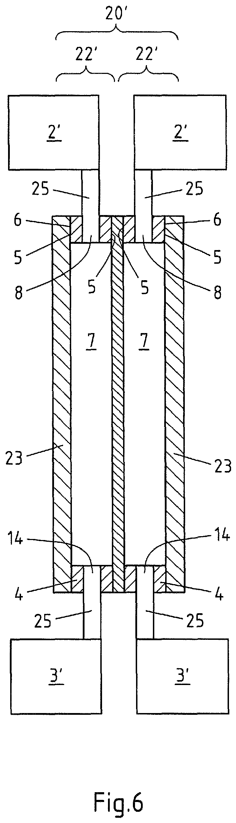

In der Fig. 6 ist eine unter Verwendung von Zellrahmen 4, wie sie in der Fig. 5 dargestellt sind, gebildete elektrochemische Zelle 20' dargestellt. Eine Mehrzahl dieser Zellen 20' kann zu einem Zellstack aufeinander gestapelt werden, und zwar nach dem Grundprinzip, wie es in der Fig. 4 dargestellt ist.

Die beiden Halbzellen 22' der Zelle 20' weisen jeweils einen Zellrahmen 4 auf, der einen Zellinnenraum 7 umfasst, durch den ein Elektrolyt gepumpt werden kann. Die Zellinnenräume 7 der Zellrahmen 4 sind durch Separatoren in Form einer Membran 21 getrennt, die für bestimmte Ionen durchlässig ist. Die von der Membran 21 abgewandten Außenseiten 6 der Zellrahmen 4 sind mittels Elektroden 23 verschlossen. Bei der dargestellten und insoweit bevorzugten Redox-Flow-Batterie sind die Elektroden als Graphitelektroden ausgebildet. Jeder Halbzelle 22' wird ein anderer Elektrolyt über die Versorgungsleitungen 2' und die separaten Strömungskanäle 8 im Zellrahen 4 zugeführt und über separate Strömungskanäle 14 und die Entsorgungsleitungen 3' abgeleitet.

Die Elektroden 23, die Zellrahmen 4 und die Membran 21 werden mit einer solchen Flächenpressung gegeneinander gepresst, dass die Zelle 20' dicht ist und die Elektrolyte nicht in unerwünschter Weise austreten.

## Patentansprüche

1. Redox-Flow-Batterie (1,1') mit wenigstens einem einen Zellinnenraum (7) umfassenden Zellrahmen (4) und mit wenigstens einer außerhalb des Zellrahmens (4) vorgesehenen Versorgungsleitung (2,2') zum Zuführen von Elektrolyt zum Zellinnenraum (7) und/oder wenigstens einer außerhalb des Zellrahmens (4) vorgesehenen Entsorgungsleitung (3,3')zum Abführen von Elektrolyt aus dem Zellinnenraum (4),
dadurchgekennzeichnet, dass die Versorgungsleitung (2,2') zum Zuführen von Elektrolyt zu dem Zellinnenraum (7) des Zellrahmens (4) über eine Mehrzahl von separaten und untereinander unverbundenen Strömungskanälen (8) in dem wenigstens einen Zellrahmen (4) in fluidem Kontakt mit dem Zellinnenraum (7) steht und die Strömungskanäle (8) zum Zuführen von Elektrolyt zu dem Zellinnenraum (7) des Zellrahmens (4) jeweils am äußeren umlaufenden Rand des Zellrahmens (4) Öffnungen (12) aufweisen und/oder dass die Entsorgungsleitung (3,3') zum Abführen von Elektrolyt aus dem Zellinnenraum (7) des Zellrahmens (4) über eine Mehrzahl von separaten und untereinander unverbundenen Strömungskanälen (14) in dem wenigsten einem Zellrahmen (4) in fluidem Kontakt mit dem Zellinnenraum (7) steht und die Strömungskanäle (14) zum Abführen von Elektrolyt aus dem Zellinnenraum (7) des Zellrahmens (4) jeweils am äußeren umlaufenden Rand des Zellrahmens (4) Öffnungen (17) aufweisen.

2. Redox-Flow-Batterie nach Anspruch 1,
dadurchgekennzeichnet, dass der Zellinnenraum (7) über wenigstens 10, vorzugsweise wenigstens 20, insbesondere wenigstens 30, separate, im Zellrahmen vorgesehene Strömungskanäle (8,14) mit der Versorgungsleitung (2,2') zum Zuführen von Elektrolyt zum Zellinnenraum (7) und/oder mit der Entsorgungsleitung (3,3') zum Abführen von Elektrolyt aus dem Zellinnenraum (7) in fluidem Kontakt steht.

3. Redox-Flow-Batterie nach Anspruch 1 oder 2,
dadurchgekennzeichnet, dass die Mehrzahl separater Strömungskanäle (8,14) zum Zuführen von Elektrolyt zum Zellinnenraum (7) und/oder zum Abführen von Elektrolyt aus dem Zellinnenraum (7) jeweils einen hydraulischen Innendurchmesser zwischen 0,5 mm und 20 mm, vorzugsweise zwischen 1 mm und 10 mm, aufweisen.

4. Redox-Flow-Batterie nach einem der Ansprüche 1 bis 3,
dadurchgekennzeichnet, dass die Mehrzahl separater Strömungskanäle (8) zwischen dem Zellinnenraum (7) und der Versorgungsleitung (2,2') sowie die Strömungskanäle (14) zwischen dem Zellinnenraum (7) und der Entsorgungsleitung (3,3') auf unterschiedlichen Seiten des Zellrahmens (4) und/oder des Zellinnenraums (7) vorgesehen sind.

5. Redox-Flow-Batterie nach einem der Ansprüche 1 bis 4,
dadurchgekennzeichnet, dass die Mehrzahl separater Strömungskanäle (8) zum Versorgen des Zellinnenraums (7) mit Elektrolyt und/oder die Mehrzahl separater Strömungskanäle (14) zum Abführen von Elektrolyt aus dem Zellinnenraum (7) im Zellrahmen (4) wenigstens im Wesentlichen unverzweigt sind.

6. Redox-Flow-Batterie nach einem der Ansprüche 1 bis 5,
dadurchgekennzeichnet, dass die Querschnittsfläche der Versorgungsleitung (2,2') und/oder der Entsorgungsleitung (3,3') wenigstens um den Faktor 10, vorzugsweise 50, insbesondere 100, größer ist als die Querschnittsfläche der Mehrzahl von zwischen dem Zellinnenraum (7) und der Versorgungsleitung (2,2') und/oder zwischen dem Zellinnenraum (7) und der Entsorgungsleitung (3,3') im Zellrahmen (4) vorgesehenen, separaten Strömungskanäle (8,14)).

7. Redox-Flow Batterie nach einem der Ansprüche 1 bis 6,
dadurchgekennzeichnet, dass wenigstens eine Zelle (20.20') umfassend zwei Halbzellen (22,22') vorgesehen ist, dass jede Halbzelle (22,22') einen einen Zellinnenraum (7) umfassenden Zellrahmen (4) und wenigstens eine außerhalb der Zellrahmen (4) vorgesehene Versorgungsleitung (2,2') zum Zuführen von Elektrolyt zu den Zellinnenräumen (7) aufweist und dass die wenigstens eine Versorgungsleitung (2,2') zum Zuführen von Elektrolyt zu den Zellinnenräumen (7) jeweils über eine Mehrzahl im jeweiligen Zellrahmen (4) vorgesehenen, separaten Strömungskanäle (8) in fluidem Kontakt mit den Zellinnenräumen (7) steht.

8. Redox-Flow Batterie nach einem der Ansprüche 1 bis 7,
dadurchgekennzeichnet, dass wenigstens eine Zelle (20,20') umfassend zwei Halbzellen (22,22') vorgesehen ist, dass jede Halbzelle (22,22') einen einen Zellinnenraum (7) umfassenden Zellrahmen (4) und wenigstens eine außerhalb der Zellrahmen (4) vorgesehene Entsorgungsleitung (2,2') zum Abführen von Elektrolyt aus den Zellinnenräumen (7) aufweist und dass die wenigstens eine Entsorgungsleitung (2,2') zum Abführen von Elektrolyt aus den Zellinnenräumen (7) jeweils über eine Mehrzahl von im jeweiligen Zellrahmen (4) vorgesehenen, separaten Strömungskanälen (14) in fluidem Kontakt mit den Zellinnenräumen (7) steht.

9. Redox-Flow-Batterie nach einem der Ansprüche 1 bis 8,
dadurchgekennzeichnet, dass eine Mehrzahl von Zellen (20,20') vorgesehen sind, dass jede Zelle (20,20') wenigstens einen einen Zellinnenraum (7) umfassenden Zellrahmen (4) aufweist, dass wenigstes eine außerhalb der Zellrahmen (4) angeordnete Versorgungsleitung (2,2') zum Zuführen von Elektrolyt zu den Zellinnenräumen (7) vorgesehen ist und dass die wenigstens eine Versorgungsleitung (2,2') zum Zuführen von Elektrolyt zu den Zellinnenräumen (7) jeweils über eine Mehrzahl von im jeweiligen Zellrahmen (4) vorgesehenen, separaten Strömungskanälen (8) in fluidem Kontakt mit den Zellinnenräumen (7) steht.

10. Redox-Flow-Batterie nach einem der Ansprüche 1 bis 9,
dadurchgekennzeichnet, dass eine Mehrzahl von Zellen (20,20') vorgesehen sind, dass jede Zelle (20,20') wenigstens einen einen Zellinnenraum (7) umfassenden Zellrahmen (4) aufweist, dass wenigstes eine außerhalb der Zellrahmen (4) angeordnete Entsorgungsleitung (3,3') zum Abführen von Elektrolyt aus den Zellinnenräumen (7) vorgesehen ist und dass die wenigsten eine Entsorgungsleitung (3,3') zum Abführen von Elektrolyt aus den Zellinnenräumen (7) jeweils über eine Mehrzahl von im jeweiligen Zellrahmen (4) vorgesehenen, separaten Strömungskanälen (14) in fluidem Kontakt mit den Zellinnenräumen (7) steht.

11. Redox-Flow-Batterie nach Anspruch 9 oder 10,
dadurchgekennzeichnet, dass die Mehrzahl von Zellen (20,20') zu einem Zellstack zusammengefügt, vorzugsweise aufeinander gestapelt, ist.

12. Redox-Flow-Batterie nach einem der Ansprüche 1 bis 11,
dadurchgekennzeichnet, dass die Mehrzahl separater Strömungskanäle (8) des wenigstens einen Zellrahmens (4) zum Zuführen von Elektrolyt zum jeweiligen Zellinnenraum (7) und/oder die Mehrzahl separater Strömungskanäle (14) des wenigstens einen Zellrahmens (4) zum Abführen von Elektrolyt aus dem jeweiligen Zellinnenraum (7) jeweils über ihren gesamten Umfang vom Zellrahmen (4) umfasst sind.

13. Verfahren zum Betrieb einer Redox-Flow-Batterie nach einem der Ansprüche 1 bis 12,
bei dem wenigstens einem von einem Zellrahmen (4) umfassten Zellinnenraum (7) über eine Mehrzahl von separaten, im Zellrahmen (4) vorgesehenen Strömungskanälen (8) ein Elektrolyt zugeführt und/oder aus wenigstens einem von einem Zellrahmen (4) umfassten Zellinnenraum (7) über eine Mehrzahl von separaten, im Zellrahmen vorgesehenen Strömungskanälen (14) ein Elektrolyt abgeführt wird.

14. Verfahren nach Anspruch 13,
bei dem der Elektrolyt jeweils über einer Mehrzahl von in den jeweiligen Zellrahmen (4) vorgesehenen, separaten Strömungskanälen (8) einer Mehrzahl von von Zellrahmen (4) umfassten Zellinnenräumen (7) einer Zelle und/oder eines Zellstacks zugeführt und/oder der Elektrolyt jeweils über eine Mehrzahl von in den jeweiligen Zellrahmen (4) vorgesehenen, separaten Strömungskanälen (14) aus einer Mehrzahl von von Zellrahmen (4) umfassten Zellinnenräumen (7) einer Zelle (20,20') und/oder eines Zellstacks abgeführt wird.

## Claims

1. Redox flow battery (1, 1') with at least one cell frame (4) encompassing a cell internal space (7) and with at least one supply line (2, 2') provided outside the cell frame (4) for supplying electrolyte to the cell internal space (7) and/or at least one disposal line (3, 3') provided outside the cell frame (4) for discharging electrolyte from the cell internal space (4),
**characterised in that**
the supply line (2, 2') for supplying electrolyte to the cell internal space (7) of the cell frame (4) is in fluid contact with the cell internal space (7) via a plurality of separate flow channels (8) which are unconnected to each other and are in the at least one cell frame (4) and the flow channels (8) for supplying electrolyte to the cell internal space (7) of the cell frame (4) each have openings (12) at the outer circumferential edge of the cell frame (4) and/or **in that** the disposal line (3, 3') for discharging electrolyte from the cell internal space (7) of the cell frame (4) is in fluid contact with the cell internal space (7) via a plurality of separate flow channels (14) which are unconnected to each other and are in the at least one cell frame (4) and the flow channels (14) for discharging electrolyte from the cell internal space (7) of the cell frame (4) each have openings (17) at the outer circumferential edge of the cell frame (4).

2. Redox flow battery according to claim 1,
**characterised in that**
the cell internal space (7) is in fluid contact with the supply line (2, 2') for supplying electrolyte to the cell internal space (7) and/or with the disposal line (3, 3') for discharging electrolyte from the cell internal space (7) via at least 10, preferably at least 20, in particular at least 30, separate flow channels (8, 14) provided in the cell frame.

3. Redox flow battery according to claim 1 or 2,
**characterised in that**
the plurality of separate flow channels (8, 14) for supplying electrolyte to the cell internal space (7) and/or for discharging electrolyte from the cell internal space (7) each have a hydraulic inner diameter between 0.5 mm and 20 mm, preferably between 1 mm and 10 mm.

4. Redox flow battery according to any one of claims 1 to 3,
**characterised in that**
the plurality of separate flow channels (8) between the cell internal space (7) and the supply line (2, 2') as well as the flow channels (14) between the cell internal space (7) and the disposal line (3, 3') are provided at different sides of the cell frame (4) and/or of the cell internal space (7).

5. Redox flow battery according to any one of claims 1 to 4,
**characterised in that**
the plurality of separate flow channels (8) for supplying the cell internal space (7) with electrolyte and/or the plurality of separate flow channels (14) for discharging electrolyte from the cell internal space (7) are at least substantially unbranched in the cell frame (4).

6. Redox flow battery according to any one of claims 1 to 5,
**characterised in that**
the cross-sectional area of the supply line (2, 2') and/or of the disposal line (3, 3') is greater by at least the factor of 10, preferably 50, in particular 100, than the cross-sectional area of the plurality of separate flow channels (8, 14) provided in the cell frame (4) between the cell internal space (7) and the supply line (2, 2') and/or between the cell internal space (7) and the disposal line (3, 3').

7. Redox flow battery according to any one of claims 1 to 6,
**characterised in that**
at least one cell (20, 20') comprising two half-cells (22, 22') is provided, **in that** each half-cell (22, 22') has a cell frame (4) encompassing a cell internal space (7) and at least one supply line (2, 2') provided outside the cell frames (4) for supplying electrolyte to the cell internal spaces (7), and **in that** the at least one supply line (2, 2') for supplying electrolyte to the cell internal spaces (7) is in fluid contact with the cell internal spaces (7) in each case via a plurality of separate flow channels (8) provided in the respective cell frame (4).

8. Redox flow battery according to any one of claims 1 to 7,
**characterised in that**
at least one cell (20, 20') comprising two half-cells (22, 22') is provided, **in that** each half-cell (22, 22') has a cell frame (4) encompassing a cell internal space (7) and at least one disposal line (2, 2') provided outside the cell frames (4) for discharging electrolyte from the cell internal spaces (7), and **in that** the at least one disposal line (2, 2') for discharging electrolyte from the cell internal spaces (7) is in fluid contact with the cell internal spaces (7) in each case via a plurality of separate flow channels (14) provided in the respective cell frame (4).

9. Redox flow battery according to any one of claims 1 to 8,
**characterised in that**
a plurality of cells (20, 20') are provided, **in that** each cell (20, 20') has at least one cell frame (4) encompassing a cell internal space (7), **in that** at least one supply line (2, 2') arranged outside the cell frames (4) for supplying electrolyte to the cell internal spaces (7) is provided, and **in that** the at least one supply line (2, 2') for supplying electrolyte to the cell internal spaces (7) is in fluid contact with the cell internal spaces (7) in each case via a plurality of separate flow channels (8) provided in the respective cell frame (4).

10. Redox flow battery according to any one of claims 1 to 9,
**characterised in that**
a plurality of cells (20, 20') are provided, **in that** each cell (20, 20') has at least one cell frame (4) encompassing a cell internal space (7), **in that** at least one disposal line (3, 3') arranged outside the cell frames (4) for discharging electrolyte from the cell internal spaces (7) is provided, and **in that** the at least one disposal line (3, 3') for discharging electrolyte from the cell internal spaces (7) is in fluid contact with the cell internal spaces (7) in each case via a plurality of separate flow channels (14) provided in the respective cell frame (4).

11. Redox flow battery according to claim 9 or 10,
**characterised in that**
the plurality of cells (20, 20') is assembled, preferably stacked one on the other, to form a cell stack.

12. Redox flow battery according to any one of claims 1 to 11,
**characterised in that**
the plurality of separate flow channels (8) of the at least one cell frame (4) for supplying electrolyte to the respective cell internal space (7) and/or the plurality of separate flow channels (14) of the at least one cell frame (4) for discharging electrolyte from the respective cell internal space (7) are each encompassed over their entire circumference by the cell frame (4).

13. Method for operating a redox flow battery according to any one of claims 1 to 12, wherein an electrolyte is supplied to at least one cell internal space (7) encompassed by a cell frame (4) via a plurality of separate flow channels (8) provided in the cell frame (4) and/or an electrolyte is discharged from at least one cell internal space (7) encompassed by a cell frame (4) via a plurality of separate flow channels (14) provided in the cell frame (4).

14. Method according to claim 13,
wherein the electrolyte is supplied to a plurality of cell internal spaces (7) of a cell and/or a cell stack which are encompassed by cell frames (4) in each case via a plurality of separate flow channels (8) provided in the respective cell frames (4) and/or the electrolyte is discharged from a plurality of cell internal spaces (7) of a cell (20, 20') and/or a cell stack which are encompassed by cell frames (4) in each case via a plurality of separate flow channels (14) provided in the respective cell frames (4).

## Revendications

1. Batterie à flux redox (1, 1') avec au moins un cadre de cellule (4) entourant un espace intérieur de cellule (7) et avec au moins une conduite d'alimentation (2, 2') prévue à l'extérieur du cadre de cellule (4) pour alimenter électrolyte vers l'espace intérieur de cellule (7) et/ou au moins une conduite d'évacuation (3, 3') prévue à l'extérieur du cadre de cellule (4) pour évacuer électrolyte de l'espace intérieur de cellule (4), **caractérisée en ce que**
la conduite d'alimentation (2, 2') pour alimenter électrolyte vers l'espace intérieur de cellule (7) du cadre de cellule (4), par l'intermédiaire d'une pluralité de canaux d'écoulement (8) séparés et non reliés l'un à l'autre qui sont dans le au moins un cadre de cellule (4), est en contact fluidique avec l'espace intérieur de cellule (7) et les canaux d'écoulement (8) pour alimenter électrolyte vers l'espace intérieur de cellule (7) du cadre de cellule (4) présentent, respectivement sur le bord circonférentiel extérieur du cadre de cellule (4), des ouvertures (12) et/ou **en ce que** la conduite d'évacuation (3, 3') pour évacuer électrolyte de l'espace intérieur de cellule (7) du cadre de cellule (4), par l'intermédiaire d'une pluralité de canaux d'écoulement (14) séparés et non reliés l'un à l'autre qui sont dans le au moins un cadre de cellule (4), est en contact fluidique avec l'espace intérieur de cellule (7) et les canaux d'écoulement (14) pour évacuer électrolyte de l'espace intérieur de cellule (7) du cadre de cellule (4) présentent, respectivement sur le bord circonférentiel extérieur du cadre de cellule (4), des ouvertures (17).

2. Batterie à flux redox selon la revendication 1,
**caractérisée en ce que**
l'espace intérieur de la cellule (7) est en contact fluidique, par l'intermédiaire d'au moins 10, de préférence au moins 20, notamment au moins 30, canaux d'écoulement (8, 14) séparés et prévus dans le cadre de cellule, avec la conduite d'alimentation (2, 2') pour alimenter électrolyte vers l'espace intérieur de cellule (7) et/ou avec la conduite d'évacuation (3, 3') pour évacuer électrolyte de l'espace intérieur de cellule (7).

3. Batterie à flux redox selon la revendication 1 ou 2,
**caractérisée en ce que**
la pluralité de canaux d'écoulement (8, 14) séparés pour alimenter électrolyte vers l'espace intérieur de cellule (7) et/ou pour évacuer électrolyte de l'espace intérieur de cellule (7) présente respectivement un diamètre intérieur hydraulique entre 0,5 mm et 20 mm, de préférence entre 1 mm et 10 mm.

4. Batterie à flux redox selon l'une des revendications 1 à 3,
**caractérisée en ce que**
la pluralité de canaux d'écoulement (8) séparés entre l'espace intérieur de cellule (7) et la conduite d'alimentation (2, 2') ainsi que les canaux d'écoulement (14) entre l'espace intérieur de cellule (7) et la conduite d'évacuation (3, 3') sont prévus sur des côtés différents du cadre de cellule (4) et/ou de l'espace intérieur de cellule (7).

5. Batterie à flux redox selon l'une des revendications 1 à 4,
**caractérisée en ce que**
la pluralité de canaux d'écoulement (8) séparés pour alimenter l'espace intérieur de cellule (7) en électrolyte et/ou la pluralité de canaux d'écoulement (14) séparés pour évacuer électrolyte de l'espace intérieur de cellule (7) sont au moins sensiblement non ramifiées dans le cadre de cellule (4).

6. Batterie à flux redox selon l'une des revendications 1 à 5,
**caractérisée en ce que**
la surface en section transversale de la conduite d'alimentation (2, 2') et/ou de la conduite d'évacuation (3, 3') est au moins 10 fois, de préférence 50 fois, notamment 100 fois, supérieure que la surface en section transversale de la pluralité de canaux d'écoulement (8, 14) séparés et prévus dans le cadre de cellule (4) entre l'espace intérieur de cellule (7) et la conduite d'alimentation (2, 2') et/ou entre l'espace intérieur de cellule (7) et la conduite d'évacuation (3, 3').

7. Batterie à flux redox selon l'une des revendications 1 à 6,
**caractérisée en ce que**
au moins une cellule (20, 20') comportant deux demi-cellules (22, 22') est prévue, **en ce que** chaque demi-cellule (22, 22') présente un cadre de cellule (4) entourant un espace intérieur de cellule (7) et au moins une conduite d'alimentation (2, 2') prévue à l'extérieur des cadres de cellule (4) pour alimenter électrolyte vers les espaces intérieurs de cellule (7) et **en ce que** la au moins une conduite d'alimentation (2, 2') pour alimenter électrolyte vers les espaces intérieurs de cellule (7), respectivement par l'intermédiaire d'une pluralité de canaux d'écoulement (8) séparés et prévus dans le cadre de cellule (4) respectif, est en contact fluidique avec les espaces intérieurs de cellule (7).

8. Batterie à flux redox selon l'une des revendications 1 à 7,
**caractérisée en ce que**
au moins une cellule (20, 20') comportant deux demi-cellules (22, 22') est prévue, **en ce que** chaque demi-cellule (22, 22') présente un cadre de cellule (4) entourant un espace intérieur de cellule (7) et au moins une conduite d'évacuation (2, 2') prévue à l'extérieur des cadres de cellule (4) pour évacuer électrolyte des espaces intérieurs de cellule (7) et **en ce que** la au moins une conduite d'évacuation (2, 2') pour évacuer électrolyte des espaces intérieurs de cellule (7), respectivement par l'intermédiaire d'une pluralité de canaux d'écoulement (14) séparés et prévus dans le cadre de cellule (4) respectif, est en contact fluidique avec les espaces intérieurs de cellule (7).

9. Batterie à flux redox selon l'une des revendications 1 à 8,
**caractérisée en ce que**
une pluralité de cellules (20, 20') sont prévues, **en ce que** chaque cellule (20, 20') présente au moins un cadre de cellule (4) entourant un espace intérieur de cellule (7), **en ce qu'**au moins une conduite d'alimentation (2, 2') agencée à l'extérieur des cadres de cellule (4) pour alimenter électrolyte vers les espaces intérieurs de cellule (7) est prévue et **en ce que** la au moins une conduite d'alimentation (2, 2') pour alimenter électrolyte vers les espaces intérieurs de cellule (7), respectivement par l'intermédiaire d'une pluralité de canaux d'écoulement (8) séparés et prévus dans le cadre de cellule (4) respectif, est en contact fluidique avec les espaces intérieurs de cellule (7).

10. Batterie à flux redox selon l'une des revendications 1 à 9,
**caractérisée en ce que**
une pluralité de cellules (20, 20') sont prévues, **en ce que** chaque cellule (20, 20') présente au moins un cadre de cellule (4) entourant un espace intérieur de cellule (7), **en ce qu'**au moins une conduite d'évacuation (3, 3') agencée à l'extérieur des cadres de cellule (4) pour évacuer électrolyte des espaces intérieurs de cellule (7) est prévue et **en ce que** la au moins une conduite d'évacuation (3, 3') pour évacuer d'électrolyte des espaces intérieurs de cellule (7), respectivement par l'intermédiaire d'une pluralité de canaux d'écoulement (14) séparés et prévus dans le cadre de cellule (4) respectif, est en contact fluidique avec les espaces intérieurs de cellule (7).

11. Batterie à flux redox selon la revendication 9 ou 10,
**caractérisée en ce que**
la pluralité de cellules (20, 20') est assemblée, de préférence est empilée l'une sur l'autre, pour former une pile de cellule.

12. Batterie à flux redox selon l'une des revendications 1 à 11,
**caractérisée en ce que**
la pluralité de canaux d'écoulement (8) séparés du au moins un cadre de cellule (4) pour alimenter électrolyte vers l'espace intérieur de cellule (7) respectif et/ou la pluralité de canaux d'écoulement (14) séparés du au moins un cadre de cellule (4) pour évacuer électrolyte de l'espace intérieur de cellule (7) respectif sont chacun entourées sur toute leur circonférence par le cadre de cellule (4).

13. Procédé de fonctionnement une batterie à flux redox selon l'une des revendications 1 à 12,
dans lequel un électrolyte est alimenté vers au moins un espace intérieur de cellule (7) entouré par un cadre de cellule (4) par l'intermédiaire d'une pluralité de canaux d'écoulement (8) séparés et prévus dans le cadre de cellule (4) et/ou un électrolyte est évacué d'au moins un espace intérieur de cellule (7) entouré par un cadre de cellule (4) par l'intermédiaire d'une pluralité de canaux d'écoulement (14) séparés et prévus dans le cadre de cellule.

14. Procédé selon la revendication 13,
dans lequel l'électrolyte est alimenté, respectivement par l'intermédiaire d'une pluralité de canaux d'écoulement (8) séparés et prévus dans les cadres de cellule (4) respectives, vers une pluralité d'espaces intérieurs de cellule (7) d'une cellule et/ou une pile de cellule qui sont entourée par des cadres de cellule (4) et/ou l'électrolyte est évacué, respectivement par l'intermédiaire d'une pluralité de canaux d'écoulement (8) séparés et prévus dans les cadres de cellule (4) respectives, d'une pluralité d'espaces intérieurs de cellule (7) d'une cellule (20, 20') et/ou une pile de cellule qui sont entourée par des cadres de cellule (4)
